# EUROPEAN PATENT APPLICATION

(11) **EP 2 645 065 A2**
(43) Date of publication of application: **02.10.2013**
(21) Application number: 13158859.2
(22) Date of filing: 12.03.2013
(51) Int. Cl.: G01C 23/00

(54) **System and method for displaying remaining runway distance during a landing-and-hold-short procedure**

(30) Priority: 27.03.2012 US 201213430904
(71) Applicant: Honeywell International Inc., Morristown, NJ 07962-2245 (US)
(72) Inventor: Feyereisen, Thea L., Morristown, NJ New Jersey 07962-2245 (US); Nichols, Troy, Morristown, NJ New Jersey 07962-2245 (US); Suddreth, John G., Morristown, NJ New Jersey 07962-2245 (US)
(74) Representative: Houghton, Mark Phillip

(57) **Abstract**

A system and method for enhancing situational awareness onboard an aircraft comprises displaying a marker on a cockpit display visually and textually representing the distance remaining to a LAHSO line on an airport runway. The system comprises a flight deck display and a processor operatively coupled to the flight deck display and configured to (1) render a display of the runway on the flight deck display, and (2) render markers on the display visually and textually representing distance remaining on the runway to a LAHSO line.

## Description

### TECHNICAL FIELD

Embodiments of the subject matter described herein relate generally to avionics systems such as flight display systems and, more particularly, to a flight deck display system that generates a synthetic display of an airport runway that includes graphical representations of distance remaining on a runway during a Land And Hold Short Operation (LAHSO).

### BACKGROUND

Modem flight deck displays for vehicles (such as aircraft or spacecraft) display a considerable amount of information, such as vehicle position, speed, altitude, attitude, navigation, target, and terrain information. In the case of an aircraft, most modem displays additionally display a flight plan from different views, either a lateral view, a vertical view, or a perspective view, which can be displayed individually or simultaneously on the same or adjacent display. Many synthetic vision systems attempt to reproduce the real-world appearance of an airport field, including items such as terminal buildings, taxiway signs, and runway signs. The primary perspective view used in synthetic vision systems emulates a forward-looking cockpit viewpoint. Such a view is intuitive and provides helpful visual information to the pilot and crew, especially during airport approaches and taxiing. In this regard, synthetic display systems for aircraft are beginning to employ realistic simulations of airports that include details such as runways, taxiways, buildings, etc. For example, it is known to provide a pilot with visual and audible alerts (including displayed graphics) that indicate remaining runway distance. The alerts are typically repeated every one-thousand feet and, more frequently, when there is less than one-thousand feet of remaining runway.

A Land and Hold Short Operation (LASHO) is a traffic control procedure intended to increase airport capacity without compromising safety. Such procedures are being utilized with greater frequency as traffic density increases. A LASHO procedure includes landing and holding short of (1) an intersecting runway, (2) an intersecting taxiway, or (3) some other designated point on a runway other than an intersecting runway or taxiway. Air traffic controllers may clear a pilot to land and hold short if, in addition to other requirements, minimum weather and runway requirements are met. However, the decision to accept a LAHSO clearance is completely up to the pilot-in-command since the safety and operation of the aircraft remain the pilot's responsibility.

LAHSO lines may be identified by markings, signage, and lighting; however, the onboard graphic and audible alerts referred to above do not include similar alerts associated with a LAHSO procedure. That is, similar onboard alerts are not provided that indicate the remaining distance to a LAHSO line; thus, the use of graphic an aural alerts relating to end-of-runway do not adequately support LAHSO.

Accordingly, it would be desirable to increase a pilot's situational awareness during a LAHSO procedure by providing an onboard avionics system and method that provides a pilot with graphic and/or aural indications of the remaining runway distance to a LAHSO line. Furthermore, other desirable features and characteristics will become apparent from the subsequent detailed description and the appended claims, taken in conjunction with the accompanying drawings and the foregoing technical field and background.

### BRIEF SUMMARY

A method is provided for enhancing situational awareness onboard an aircraft during a LAHSO procedure comprising rendering markers on a flight deck display visually and textually representative of the distance remaining to a LAHSO line.

A flight deck display system is also provided and comprises a first source of geographic aircraft position data, a second source of runway feature data including runway length, and a third source of LAHSO data. A flight deck display is coupled to a processor that is configured to (1) access the geographic aircraft position data, runway feature data, and LAHSO data; (2) render a display of the runway on the flight deck display; and (3) render markers on the display visually and textually representing distance remaining on the runway to a LAHSO line.

A method is also provided for displaying a marker visually and textually representing the distance remaining to a LAHSO line on an airport runway. The method comprises obtaining geographic position data for an aircraft, runway feature data, and LAHSO data to determine the position of the LAHSO line, and rendering a dynamic synthetic display of the aircraft proceeding down the runway including a series of markers visually and textually representing remaining distance to the LAHSO line spaced along the runway.

### BRIEF DESCRIPTION OF THE DRAWINGS

A more complete understanding of the subject matter may be derived by referring to the following detailed description and claims when considered in conjunction with the following figures, wherein like reference numbers refer to similar elements throughout the figures: and

FIG. 1 is a schematic representation of an embodiment of a flight deck display system;

FIG. 2 is a flow chart that illustrates an exemplary embodiment of a dynamic synthetic display rendering process;

FIG. 3 is a graphical representation of a synthetic display having rendered thereon an airport field and related runway signage; and

FIG. 4 is a flow chart that illustrates an exemplary embodiment of a variable display characteristics process.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The system and methods described herein can be deployed with any vehicle, including aircraft, automobiles, spacecraft, watercraft, and the like. The preferred embodiments of the system and methods described herein represent an intelligent way to present visual airport information to a pilot or flight crew during operation of the aircraft and, in particular, during LAHSO maneuvers.

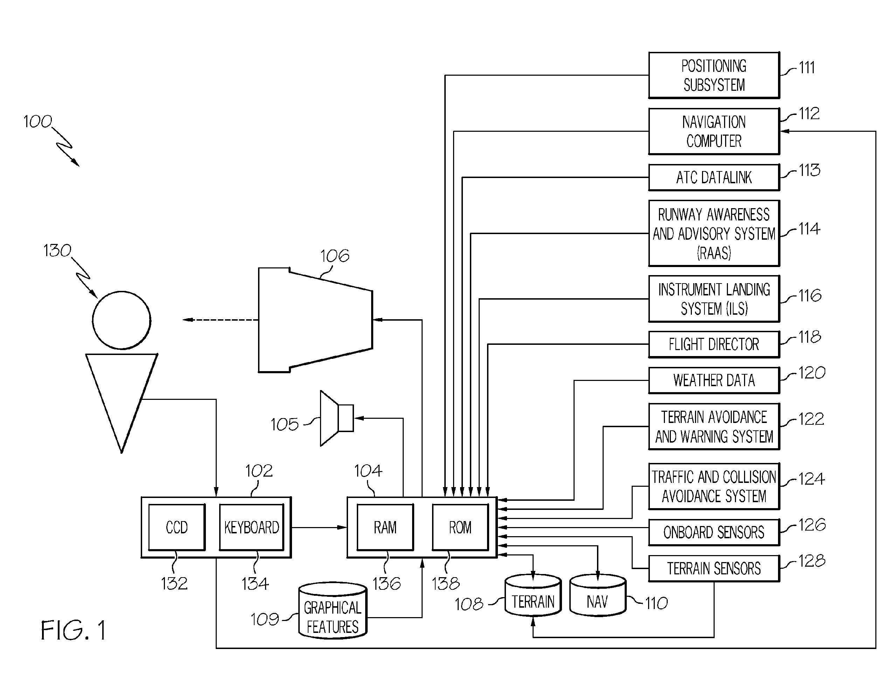

Turning now to the drawings, FIG. 1 depicts an exemplary flight deck display system **100** (suitable for a vehicle such as an aircraft) that generally includes, without limitation: a user interface **102;** a processor architecture **104** coupled to the user interface **102;** an aural annunciator **105;** and a display element **106** coupled to the processor architecture **104.** The system **100** may also include, cooperate with, and/or communicate with a number of databases, sources of data, or the like. Moreover, the system **100** may include, cooperate with, and/or communicate with a number of external subsystems as described in more detail below. For example, the processor architecture **104** may cooperate with one or more of the following components, features, data sources, and subsystems, without limitation: one or more terrain databases **108;** one or more graphical features databases **109;** one or more navigation databases **110;** a positioning subsystem **111;** a navigation computer **112;** an air traffic control (ATC) data link subsystem **113;** a runway awareness and advisory system (RAAS) **114;** an instrument landing system (ILS) **116;** a flight director **118;** a source of weather data **120;** a terrain avoidance and warning system (TAWS) **122;** a traffic and collision avoidance system (TCAS) **124;** one or more onboard sensors **126;** and one or more terrain sensors **128.**

The user interface **102** is in operable communication with the processor architecture **104** and is configured to receive input from a user **130** (e.g., a pilot) and, in response to the user input, supply command signals to the processor architecture **104.** The user interface **102** may be any one, or combination, of various known user interface devices including, but not limited to, a cursor control device (CCD) **132,** such as a mouse, a trackball, or joystick, one or more buttons, switches, or knobs. In the depicted embodiment, the user interface **102** includes the CCD **132** and a keyboard **134.** The user **130** manipulates the CCD **132** to, among other things, move cursor symbols that might be rendered at various times on the display element **106,** and the user **130** may manipulate the keyboard **134** to, among other things, input textual data. As depicted in FIG. 1, the user interface **102** may also be utilized to enable user interaction with the navigation computer **112,** the flight management system, and/or other features and components of the aircraft.

The processor architecture **104** may utilize one or more known general-purpose microprocessors or an application specific processor that operates in response to program instructions. In the depicted embodiment, the processor architecture **104** includes or communicates with onboard RAM (random access memory) **136,** and onboard ROM (read only memory) **138.** The program instructions that control the processor architecture **104** may be stored in either or both the RAM **136** and the ROM **138.** For example, the operating system software may be stored in the ROM **138,** whereas various operating mode software routines and various operational parameters may be stored in the RAM **136.** It will be appreciated that this is merely exemplary of one scheme for storing operating system software and software routines, and that various other storage schemes may be implemented. It will also be appreciated that the processor architecture **104** may be implemented using various other circuits, not just a programmable processor. For example, digital logic circuits and analog signal processing circuits could also be used.

The processor architecture **104** is in operable communication with the terrain database **108,** the graphical features database **109,** the navigation database **110,** and the display element **106,** and is coupled to receive various types of data, information, commands, signals, etc., from the various sensors, data sources, instruments, and subsystems described herein. For example, the processor architecture **104** may be suitably configured to obtain and process real-time aircraft status data (e.g., avionics-related data) as needed to generate a graphical synthetic perspective representation of terrain in a primary display region. The aircraft status or flight data may also be utilized to influence the manner in which graphical features (associated with the data maintained in the graphical features database **109)** of a location of interest such as an airport are rendered during operation of the aircraft. For the exemplary embodiments described here, the graphical features database **109** may be considered to be a source of airport feature data that is associated with synthetic graphical representations of one or more airport fields.

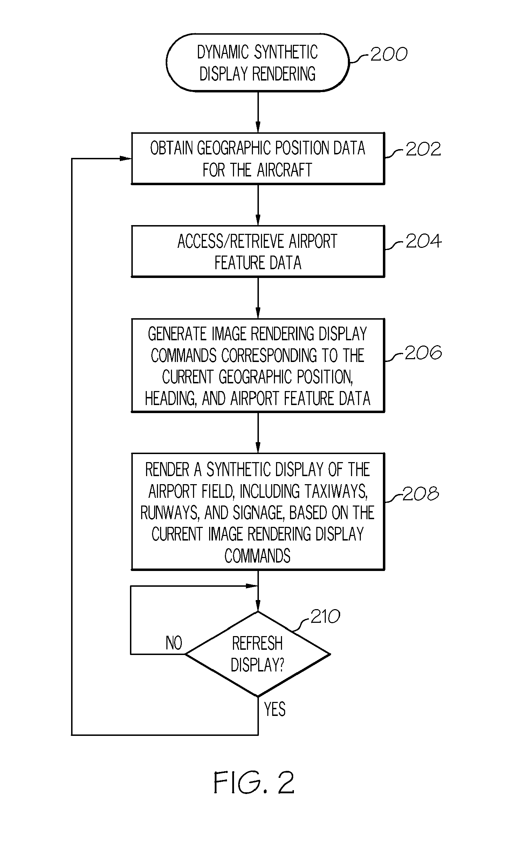

For this embodiment, the graphical features database **109** is an onboard database that contains pre-loaded airport feature data including geo-referenced runway features such as runway length and LAHSO lines. In alternate embodiments, some or all of the airport feature data can be loaded into the graphical features database **109** during flight. Indeed, some airport feature data could be received by the aircraft in a dynamic manner as needed. The airport feature data accessed by the processor architecture **104** is indicative of displayable visual features of one or more airports of interest. In practice, the airport feature data can be associated with any viewable portion, aspect, marking, structure, building, geography, and/or landscaping located at, on, in, or near an airport. The processing and rendering of the airport feature data will be described in more detail below in connection with FIGS. 2-4.

Depending upon the particular airport field, the airport feature data could be related to any of the following visually distinct features, without limitation: a runway; runway markings and vertical signage; a taxiway; taxiway markings and vertical signage; a ramp area and related markings; parking guidance lines and parking stand lines; a terminal or concourse; an air traffic control tower; a building located at or near the airport; a landscape feature located at or near the airport; a structure located at or near the airport; a fence; a wall; a vehicle located at or near the airport; another aircraft located at or near the airport; a light pole located at or near the airport; a power line located at or near the airport; a telephone pole located at or near the airport; an antenna located at or near the airport; construction equipment, such as a crane, located at or near the airport; a construction area located at or near the airport; trees or structures or buildings located around the airport perimeter; and bodies of water located in or around the airport. More particularly, runway-specific feature data could be related to, or indicate, without limitation: arresting gear location; blast pad; closed runway; rollout lighting; runway centerlines; runway displaced thresholds; runway edges; runway elevation; runway end elevation; runway exit lines; runway heading; runway Land And Hold Short lines; runway intersections; runway labels; runway landing length; runway length; runway lighting; runway markings; runway overrun; runway shoulder; runway slope; runway stop ways; runway surface information; runway that ownship is approaching; runway threshold; runway weight bearing capacity; and runway width.

In certain embodiments, the processor architecture **104** is configured to respond to inertial data obtained by the onboard sensors **126** to selectively retrieve terrain data from the terrain database **108** or the terrain sensor **128,** to selectively retrieve navigation data from the navigation database **110,** and/or to selectively retrieve graphical features data from the graphical features database **109,** where the graphical features data corresponds to the location or target of interest. The processor architecture **104** can also supply appropriate display commands (e.g., image rendering display commands) to the display element **106,** so that the retrieved terrain, navigation, and graphical features data are appropriately displayed on the display element **106.** Processor architecture **104** also provides appropriate commands to aural annunciator **105** (e.g. aural alert generating commands. The processor architecture **104** may be further configured to receive real-time (or virtually real-time) airspeed, altitude, attitude, waypoint, and/or geographic position data for the aircraft and, based upon that data, generate image rendering display commands associated with the display of terrain.

The display element **106** is used to display various images and data, in both a graphical and a textual format, and to supply visual feedback to the user **130** in response to the user input commands supplied by the user **130** to the user interface **102.** It will be appreciated that the display element **106** may be any one of numerous known displays suitable for rendering image and/or text data in a format viewable by the user **130.** Nonlimiting examples of such displays include various cathode ray tube (CRT) displays, and various flat panel displays such as, various types of LCD (liquid crystal display), OLED, and TFT (thin film transistor) displays. The display element **106** may additionally be based on a panel mounted display, a HUD projection, or any known technology. In an exemplary embodiment, the display element **106** includes a panel display, and the display element **106** is suitably configured to receive image rendering display commands from the processor architecture **104** and, in response thereto, the display element **106** renders a synthetic graphical display having a perspective view corresponding to a flight deck viewpoint. In certain situations, the display element **106** receives appropriate image rendering display commands and, in response thereto, renders a synthetic representation of an airport field. The graphically rendered airport field might include conformal graphical representations of taxiways, runways, and signage rendered on the taxiways. To provide a more complete description of the operating method that is implemented by the flight deck display system **100,** a general description of exemplary displays and various graphical features rendered thereon will be provided below with reference to FIGS. 2-4.

As FIG. 1 shows, the processor architecture **104** is in operable communication with the source of weather data **120,** the TAWS **122,** and the TCAS **124,** and is additionally configured to generate, format, and supply appropriate display commands to the display element **106** so that the avionics data, the weather data **120,** data from the TAWS **122,** data from the TCAS **124,** and data from the previously mentioned external systems may also be selectively rendered in graphical form on the display element **106.** The data from the TCAS **124** can include Automatic Dependent Surveillance Broadcast (ADS-B) messages.

The terrain database **108** includes various types of data, including elevation data, representative of the terrain over which the aircraft is flying. The terrain data can be used to generate a three dimensional perspective view of terrain in a manner that appears conformal to the earth. In other words, the display emulates a realistic view of the terrain from the flight deck or cockpit perspective. The data in the terrain database **108** can be pre-loaded by external data sources or provided in real-time by the terrain sensor **128.** The terrain sensor **128** provides real-time terrain data to the processor architecture **104** and/or the terrain database **108.** In one embodiment, terrain data from the terrain sensor **128** is used to populate all or part of the terrain database **108,** while in another embodiment, the terrain sensor **128** provides information directly, or through components other than the terrain database 108, to the processor architecture **104.**

In another embodiment, the terrain sensor **128** can include visible, low-light TV, infrared, or radar-type sensors that collect and/or process terrain data. For example, the terrain sensor **128** can be a radar sensor that transmits radar pulses and receives reflected echoes, which can be amplified to generate a radar signal. The radar signals can then be processed to generate three-dimensional orthogonal coordinate information having a horizontal coordinate, vertical coordinate, and depth or elevation coordinate. The coordinate information can be stored in the terrain database **108** or processed for display on the display element **106.**

In one embodiment, the terrain data provided to the processor architecture **104** is a combination of data from the terrain database **108** and the terrain sensor **128.** For example, the processor architecture **104** can be programmed to retrieve certain types of terrain data from the terrain database **108** and other certain types of terrain data from the terrain sensor **128.** In one embodiment, terrain data retrieved from the terrain sensor **128** can include moveable terrain, such as mobile buildings and systems. This type of terrain data is better suited for the terrain sensor **128** to provide the most up-to-date data available. For example, types of information such as water-body information and geopolitical boundaries can be provided by the terrain database **108.** When the terrain sensor **128** detects, for example, a water-body, the existence of such can be confirmed by the terrain database **108** and rendered in a particular color such as blue by the processor architecture **104.**

The navigation database **110** includes various types of navigation-related data stored therein. In preferred embodiments, the navigation database **110** is an onboard database that is carried by the aircraft. The navigation-related data include various flight plan related data such as, for example, and without limitation: waypoint location data for geographical waypoints; distances between waypoints; track between waypoints; data related to different airports; navigational aids; obstructions; special use airspace; political boundaries; communication frequencies; and aircraft approach information. In one embodiment, combinations of navigation-related data and terrain data can be displayed. For example, terrain data gathered by the terrain sensor **128** and/or the terrain database **108** can be displayed with navigation data such as waypoints, airports, etc. from the navigation database **110,** superimposed thereon.

Although the terrain database **108,** the graphical features database **109,** and the navigation database **110** are, for clarity and convenience, shown as being stored separate from the processor architecture **104,** all or portions of these databases **108, 109, 110** could be loaded into the onboard RAM **136,** stored in the ROM **138,** or integrally formed as part of the processor architecture **104.** The terrain database **108,** the graphical features database **109,** and the navigation database **110** could also be part of a device or system that is physically separate from the system **100.**

The positioning subsystem **111** is suitably configured to obtain geographic position data for the aircraft. In this regard, the positioning subsystem **111** may be considered to be a source of geographic position data for the aircraft. In practice, the positioning subsystem **111** monitors the current geographic position of the aircraft in real-time, and the real-time geographic position data can be used by one or more other subsystems, processing modules, or equipment on the aircraft (e.g., the navigation computer **112,** the RAAS **114,** the ILS **116,** the flight director **118,** the TAWS **122,** or the TCAS **124).** In certain embodiments, the positioning subsystem **111** is realized using global positioning system (GPS) technologies that are commonly deployed in avionics applications. Thus, the geographic position data obtained by the positioning subsystem **111** may represent the latitude and longitude of the aircraft in an ongoing and continuously updated manner.

The avionics data that is supplied from the onboard sensors **126** includes data representative of the state of the aircraft such as, for example, aircraft speed, altitude, attitude (i.e., pitch and roll), heading, groundspeed, turn rate, etc. In this regard, one or more of the onboard sensors **126** may be considered to be a source of heading data for the aircraft. The onboard sensors **126** can include MEMS-based, ADHRS-related or any other type of inertial sensor. As understood by those familiar with avionics instruments, the aircraft status data is preferably updated in a continuous and ongoing manner.

The weather data **120** supplied to the processor architecture **104** is representative of at least the location and type of various weather cells. The data supplied from the TCAS **124** includes data representative of other aircraft in the vicinity, which may include, for example, speed, direction, altitude, and altitude trend. In certain embodiments, the processor architecture **104,** in response to the TCAS data, supplies appropriate display commands to the display element **106** such that a graphic representation of each aircraft in the vicinity is displayed on the display element **106.** The TAWS **122** supplies data representative of the location of terrain that may be a threat to the aircraft. The processor architecture **104,** in response to the TAWS data, preferably supplies appropriate display commands to the display element **106** such that the potential threat terrain is displayed in various colors depending on the level of threat. For example, red is used for warnings (immediate danger), yellow is used for cautions (possible danger), and green is used for terrain that is not a threat. It will be appreciated that these colors and number of threat levels are merely exemplary, and that other colors and different numbers of threat levels can be provided as a matter of choice.

As was previously alluded to, one or more other external systems (or subsystems) may also provide avionics-related data to the processor architecture **104** for display on the display element **106.** In the depicted embodiment, these external systems include a flight director **118,** an instrument landing system (ILS) **116,** runway awareness and advisory system (RAAS) **114,** and navigation computer **112.** The flight director **118,** as is generally known, supplies command data representative of commands for piloting the aircraft in response to flight crew entered data, or various inertial and avionics data received from external systems. The command data supplied by the flight director **118** may be supplied to the processor architecture **104** and displayed on the display element **106** for use by the user **130,** or the data may be supplied to an autopilot (not illustrated). The autopilot, in turn, produces appropriate control signals that cause the aircraft to fly in accordance with the flight crew entered data, or the inertial and avionics data.

The ILS **116** is a radio navigation system that provides the aircraft with horizontal and vertical guidance just before and during landing and, at certain fixed points, indicates the distance to the reference point of landing. The system includes ground-based transmitters (not shown) that transmit radio frequency signals. The ILS **116** onboard the aircraft receives these signals and supplies appropriate data to the processor for display.

The RAAS **114** provides improved situational awareness to help lower the probability of runway incursions by providing timely aural advisories to the flight crew during taxi, takeoff, final approach, landing and rollout. The RAAS **114** uses GPS data to determine aircraft position and compares aircraft position to airport location data stored in the navigation database **110** and/or in the graphical features database **109.** Based on these comparisons, the RAAS **114,** if necessary, issues appropriate aural advisories. Aural advisories, which may be issued by the RAAS **114,** inform the user **130,** among other things of when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user **130** inadvertently begins to take off from a taxiway, and when an aircraft has been immobile on a runway for an extended time. During approach, data from sources such as GPS, including RNP and RNAV, can also be considered.

The navigation computer **112** is used, among other things, to allow the user **130** to program a flight plan from one destination to another. The navigation computer **112** may be in operable communication with the flight director **118.** As was mentioned above, the flight director **118** may be used to automatically fly, or assist the user **130** in flying, the programmed route. The navigation computer **112** is in operable communication with various databases including, for example, the terrain database **108** and the navigation database **110.** The processor architecture **104** may receive the programmed flight plan data from the navigation computer **112** and cause the programmed flight plan, or at least portions thereof, to be displayed on the display element **106.**

The ATC datalink subsystem **113** is utilized to provide air traffic control data to the system **100,** preferably in compliance with known standards and specifications. Using the ATC datalink subsystem **113,** the processor architecture **104** can receive air traffic control data from ground based air traffic controller stations and equipment. In turn, the system **100** can utilize such air traffic control data as needed. For example, taxi maneuver clearance may be provided by an air traffic controller using the ATC datalink subsystem **113.**

In operation, a flight deck display system as described herein is suitably configured to process the current real-time geographic position data, the current real-time heading data, the airport feature data, and possibly other data to generate image rendering display commands for the display element **106.** Thus, the synthetic graphical representation of an airport field rendered by the flight deck display system will be based upon or otherwise influenced by at least the geographic position and heading data and the airport feature data.

FIG. 2 is a flow chart that illustrates an exemplary embodiment of a process **200** related to the rendering and display of a dynamic synthetic representation of an airport field, runway distance to LAHSO line signage and distance to end of runway signage. The various tasks performed in connection with the process **200** may be performed by software, hardware, firmware, or any combination thereof. For illustrative purposes, the following description of the process **200** may refer to elements mentioned above in connection with FIG. 1. In practice, portions of the process **200** may be performed by different elements of the described system, such as the processing architecture or the display element. It should be appreciated that the process **200** may include any number of additional or alternative tasks, the tasks shown in FIG. 2 need not be performed in the illustrated order, and the process **200** may be incorporated into a more comprehensive procedure or process having additional functionality not described in detail herein.

Although the process **200** could be performed or initiated at any time while the host aircraft is operating, this example assumes that the process **200** is performed as the aircraft landing or taxiing on the runway after landing. The process **200** can be performed in a virtually continuous manner at a relatively high refresh rate. For example, iterations of the process **200** could be performed at a rate of 12-40 Hz (or higher) such that the synthetic flight deck display will be updated in real-time or substantially real time in a dynamic manner. In connection with the process **200,** the flight deck display system may obtain geographic position data (STEP **202)** and obtain heading data (STEP **204)** for the aircraft. In certain embodiments, the geographic position and heading data is obtained in real-time or virtually real-time such that it reflects the current state of the aircraft. The system may also access or retrieve airport feature data (e.g. runway data including runway length, LAHSO lines, taxiways; etc.) that is associated or otherwise indicative of synthetic graphical representations of the particular airport field (STEP **206).** As explained above, the airport feature data might be maintained onboard the aircraft, and the airport feature data corresponds to, represents, or is indicative of certain visible and displayable features of the airport field of interest. The specific airport features data that will be used to render a given synthetic display will depend upon various factors, including the current geographic position and heading data of the aircraft.

The flight deck display system can process the geographic position data, the heading data, the airport feature data including runway data, and other data if necessary in a suitable manner to generate image rendering display commands corresponding to the desired state of the synthetic display (STEP **208).** Accordingly, the rendered synthetic display will emulate the actual real-world view from the flight deck perspective. The image rendering display commands are then used to control the rendering and display of the synthetic display (STEP **210)** on the flight deck display element. As explained in more detail below, the graphical representation of the airport field might include graphical features corresponding to taxiways and runways. In accordance with an embodiment, the graphical representation of the airport field may also include one or more distance remaining to LAHSO line graphics and one or more distance to end-of-runway graphics. Corresponding alerts may also be generated by aural annunciator **105.**

If it is time to refresh the display (STEP **212),** then the process **200** leads back to task **202** to obtain the most current data. If not, then the current state of the synthetic display is maintained. The relatively high refresh rate of the process **200** results in a relatively seamless and immediate updating of the display. Thus, the process **200** is iteratively repeated to update the graphical representation of the airport field and its features including position of the aircraft on the runway. In practice, the process **200** can be repeated indefinitely and at any practical rate to support continuous and dynamic updating and refreshing of the display in real-time or virtually real-time. Frequent updating of the displays enables the flight crew to obtain and respond to the current operating situation in virtually real-time including managing aircraft operation based on the position of the aircraft on the runway relative to LAHSO lines and/or end-of-runway.

At any given moment in time, the dynamic synthetic display rendered on the flight deck display element will include a graphical representation of taxiway signage, runway signage, or both including distance remaining to LAHSO lines and distance to end-of-runway, for example, every 1000 feet and/or greater or lesser increments. An exemplary embodiment of the flight deck display system may render runway markers using different techniques, technologies, and schemes, which are described in more detail below.

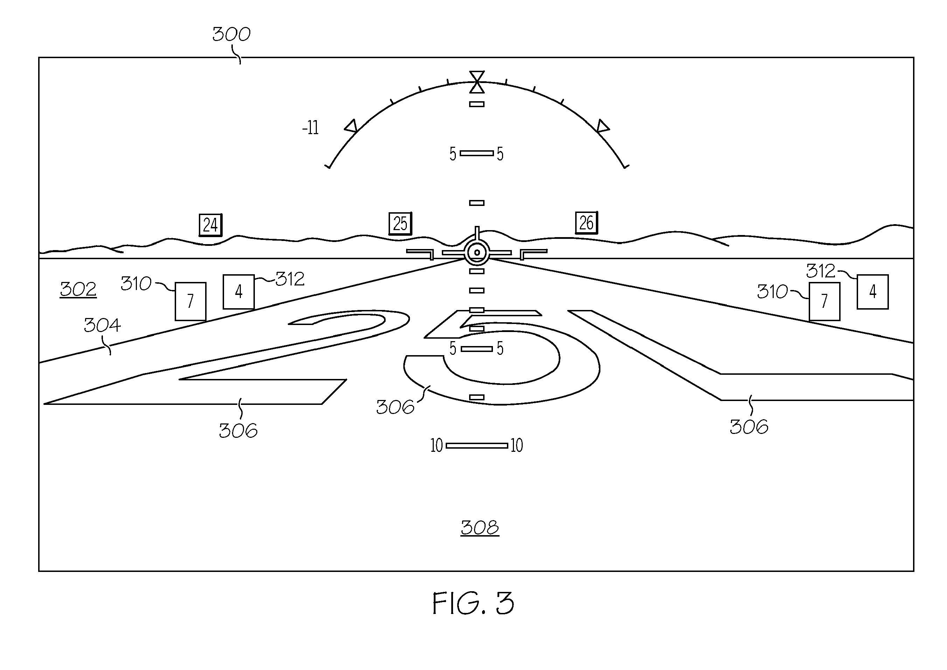

In certain embodiments, a dynamic synthetic display presented on a flight deck display element includes a graphical representation of at least one runway having an exposed surface, along with associated runway signage that is rendered on at least one side of the runway surface and preferably on both sides. In this regard, FIG. 3 depicts a synthetic display **300** of an exemplary airport field **302** at a particular moment in time as viewed from inside the cockpit of a landing aircraft. The synthetic display **300** also may include graphical representations of various features, structures, fixtures, and/or elements associated with the airport field **302** not shown here for clarity. For example, the synthetic display **300** includes graphical representations of, without limitation: taxiway markings; a ramp area and related markings; parking guidance lines and parking stand lines; landscape features located at or near the airport field **302;** terrain (e.g., mountains) located beyond the airport field **302;** runway edges; runway shoulders; taxiway centerlines; taxiway edges or boundaries; taxiway shoulders; and airport terrain features. Of course, the various graphical features rendered at any given time with a synthetic display will vary depending upon the particular airport of interest, the current position and heading of the aircraft, the desired amount of graphical detail and/or resolution, etc.

In certain embodiments, the airport field **302** is rendered in a manner that appears conformal to the earth. In other words, the synthetic display **300** emulates a realistic view of the airport field **302** from the flight deck or cockpit perspective. Thus, as the aircraft changes position and/or heading, the synthetic display **300** will be updated to preserve the conformal appearance of the airport field **302.** This effectively simulates the visual appearance that crew members would see looking out the front cockpit windows.

In certain embodiments, the synthetic display **300** includes runway signage that is conformally rendered on a runway **304.** For example, FIG. 3 shows the graphical representation of the runway signage **306** rendered on the exposed runway surface **308** that includes the identifier "25L."

In certain embodiments, synthetic display **300** includes upstanding signboards or markers **310** on one or both sides of runway **304.** These markers graphically represent the distance to the end of runway **304.** At the moment in time captured by FIG. 3, the aircraft proceeding down runway 25L is approaching markers **310** indicating that 7000 feet of runway 25L. Such signboards will be generated, typically every 1000 feet and more frequently as the aircraft approaches the end-of-runway.

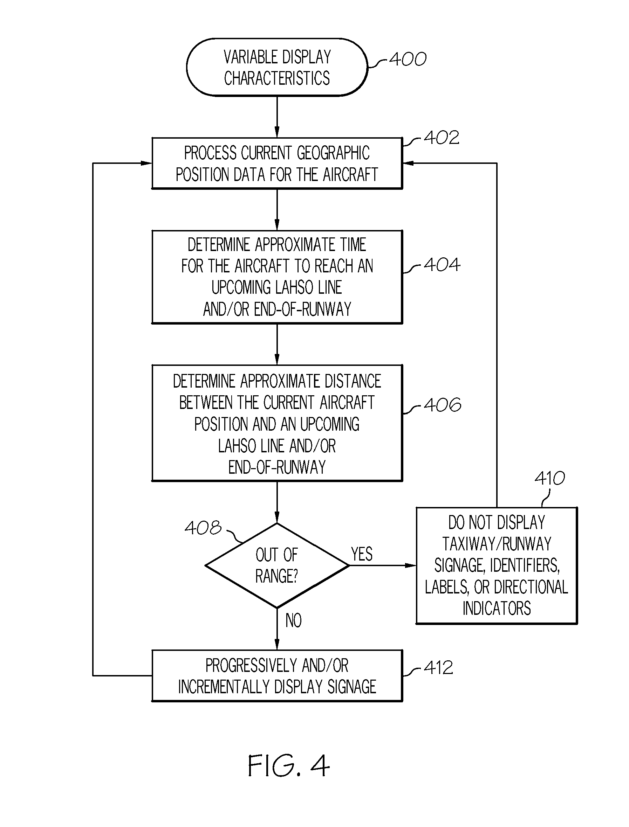

As stated previously, onboard graphical or aural alerts indicating the remaining runway distance to a LAHSO line have not been made available to aircraft crews. Therefore, in a preferred embodiment, synthetic display **300** includes signboards or markers **312** indicating the remaining distance to a LAHSO line thus increasing a pilot's situational awareness. The number "4" graphically represents 4000 feet. Thus, at the moment in time depicted in FIG. 3, the aircraft is roughly 4000 feet from the LAHSO line. As the aircraft proceeds down the runway, other signboards or markers will come into view indicating lesser distances to the LAHSO line; i.e. "3" indicating 3000 feet remaining, "2" indicating 2000 feet remaining, "1" indicating 1000 remaining, and perhaps at more frequent intervals as the aircraft approaches the LAHSO line. Thus, the viewer of the synthetic display **300** will see the runway markers **310** and **312** before the aircraft reaches the real-world location that corresponds to the graphical representation on runway 304. FIG. 4 depicts how markers **310** and **312** might be rendered while the aircraft is travelling down runway **304.** Rendering markers **310** and **312** as upstanding signboards or billboards emulate the real-world, which typically employ vertically oriented signs located on one or both sides of the runway.

The remaining distance to the LAHSO line and end-of-runway markers **312** and **310,** respectively, can be gradually introduced, incrementally rendered, faded in, and/or progressively displayed in an intelligent and intuitive manner that avoids display clutter and in a manner that makes the synthetic display **300** easier to read and interpret. In this regard, markers **310** and **312** may be influenced by the actual physical proximity and/or the actual temporal proximity of the aircraft relative to the end-of-runway or LAHSO lines. Thus, the markers that are relatively far away from the aircraft can be displayed in a subtle and inconspicuous manner, or not at all, while markers that are relatively close to the aircraft can be displayed in a more prominent and eye-catching manner. Moreover, the flight deck display system could be suitably configured such that the markers are displayed only after the aircraft is within a certain distance or time range from the markers. After a marker is passed, a new marker indicating an updated distance is displayed. This reduces clutter on the synthetic display **300** and enables the crew to concentrate on other signage that is relevant to the operation of the aircraft.

FIG. 4 is a flow chart that illustrates an exemplary embodiment of a variable display characteristics process **400,** which may be performed by an embodiment of a flight deck display system. The various tasks performed in connection with the process **400** may be performed by software, hardware, firmware, or any combination thereof. For illustrative purposes, the following description of the process **400** may refer to elements mentioned above in connection with FIG. 1. In practice, portions of the process **400** may be performed by different elements of the described system, such as the processing architecture or the display element. It should be appreciated that the process **400** may include any number of additional or alternative tasks, the tasks shown in FIG. 4 need not be performed in the illustrated order, and the process **400** may be incorporated into a more comprehensive procedure or process having additional functionality not described in detail herein. In particular, the process **400** could be integrated with or cooperatively performed with the process **200** described previously.

In connection with the process **400,** the flight deck display system analyzes and/or processes the current geographic position data (and, possibly, the current heading data) for the aircraft (STEP **402).** In addition, the process **400** may determine, calculate, or estimate the approximate time required for the aircraft to reach a designated feature, landmark, marker, point, or element associated with the airport field (STEP **404).** For example, STEP **404** could determine the approximate time for the aircraft to reach a predetermined distance from a LASHO line and/or the end-of-runway. Notably, the determination made during STEP **404** will be influenced, based upon, or otherwise dependent upon the current geographic position data, the taxi speed of the aircraft, the acceleration/deceleration of the aircraft, and/or other aircraft status data such as the current heading data. In lieu of or in addition to STEP **404,** the process **400** might determine, calculate, or estimate the approximate physical distance between the current aircraft position and a marker point associated with the runway (STEP **406).** For example, STEP **406** could determine the approximate distance between the aircraft and a point on the runway. Notably, the determination made during STEP **406** will be influenced, based upon, or otherwise dependent upon the current geographic position data (and, possibly, the current heading data) of the aircraft.

The process **400** may then check whether or not certain features of the airport field are "out of range" for purposes of synthetic display rendering (STEP **408).** For this example, a feature is considered to be out of range if the approximate distance and/or the approximate destination time to that feature (as determined by STEP **404** and/or STEP **406)** is greater than a specified physical proximity threshold and/or a specified temporal proximity threshold. If STEP **408** determines that a particular feature is out of range, then the process **400** will control the rendering of the synthetic display such that the out-of-range feature is not displayed. For this example, the markers will not be displayed. In other words, the process **400** triggers the display of graphical representations of distant markers when the signage is within range as determined by query STEP **408.** However, the process **500** will trigger the display of distance markers when the approximate time to reach that marker is less than the temporal proximity threshold.

Assuming that the features of interest are within range as defined by query STEP **408,** the process **400** may progressively and/or incrementally display the graphical representations of the distance marker during landing of the aircraft, such that at least one visually distinguishable characteristic varies as a function of the geographic position and heading data (STEP **412).** Thus, at any point in time, the flight deck display system can render and display the taxiway/runway signage using different visually distinguishable characteristics (STEP **414)** that indicate physical or temporal proximity to the aircraft and/or that are used to reduce clutter and provide a clean synthetic display. For instance, taxiway signs near to the current position of the aircraft might be rendered using a first set of visually distinguishable characteristics, while taxiway signs far from the current position of the aircraft might be rendered using a second set of visually distinguishable characteristics, where the different visually distinguishable characteristics vary as a function of the geographic position, heading, and possibly other aircraft status data. In this context, a visually distinguishable characteristic may be related to one or more of the following traits, without limitation: color; brightness; transparency level; translucency level; fill pattern; shape; size; flicker pattern; focus level; sharpness level; clarity level; shading; dimensionality (2D or 3D); resolution; and outline pattern. These visually distinguishable characteristics can be used to fade or introduce the distance markers signage into the synthetic display in a gradual manner. For example, a distance marker sign could gradually fade in from being fully transparent to being fully opaque or solid as the aircraft approaches that particular distance.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for enhancing situational awareness onboard an aircraft during a LAHSO procedure comprising rendering markers on a flight deck display visually and textually representative of the distance remaining to a LAHSO line.

2. A method according to Claim 1 further comprising generating aural annunciations of the distance to the LAHSO line.

3. A method according to Claim 1 further comprising accessing LAHSO data to determine the location of the LAHSO line.

4. A method according to Claim 3 further comprising accessing runway feature data.

5. A method according to Claim 4 further comprising:
generating symbology visually representative of a runway;
displaying the runway on the display;
generating symbology visually and textually representing the distance remaining on the runway to a LAHSO line; and
displaying the distance to the LAHSO line on the display.

6. A method according to Claim 5 wherein the step of displaying the distance to a LAHSO line comprises displaying the distance to the LAHSO line on at least one side of the displayed runway.

7. A method according to Claim 6 wherein the step of displaying comprises displaying the distance to the LAHSO line on both sides of the displayed runway.

8. A method according to Claim 6 further comprising:
generating symbology visually and textually representative of the distance to the end of the runway; and
displaying the distance to the end of the runway on the display.

9. A method according to Claim 8 wherein the distance to the end of the runway is displayed on at least one side of the displayed runway.

10. A method according to Claim 5 wherein the flight display is a synthetic vision display.
